(19) Europäisches Patentamt
European Patent Office
Office européen des brevets

(11) EP 4 543 951 B1

(12) **FASCICULE DE BREVET EUROPEEN**

(45) Date de publication et mention de la délivrance du brevet:
**05.08.2026 Bulletin 2026/32**

(21) Numéro de dépôt: **23732027.0**

(22) Date de dépôt: **08.06.2023**

(51) Classification Internationale des Brevets (IPC):
***C08F 297/06*** $^{(2006.01)}$ ***C08F 4/54*** $^{(2006.01)}$
***C08F 297/08*** $^{(2006.01)}$ ***C08F 210/02*** $^{(2006.01)}$

(52) Classification Coopérative des Brevets (CPC):
(C-Sets disponibles)
**C08F 297/06; C08F 297/083;** C08F 210/02 (Cont.)

(86) Numéro de dépôt international:
**PCT/EP2023/065365**

(87) Numéro de publication internationale:
**WO 2023/247201 (28.12.2023 Gazette 2023/52)**

(54) **POLYMÈRES DIÉNIQUES RICHES EN ÉTHYLÈNE AYANT UN BLOC POLYVINYLPYRIDINE ET LEUR PROCÉDÉ DE SYNTHÈSE**

ETHYLENREICHE DIENPOLYMERE MIT EINEM POLYVINYLPYRIDINBLOCK UND VERFAHREN ZU DEREN SYNTHESE

ETHYLENE-RICH DIENE POLYMERS HAVING A POLYVINYLPYRIDINE BLOCK, AND METHOD FOR THE SYNTHESIS THEREOF

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.06.2022 FR 2206246**

(43) Date de publication de la demande:
**30.04.2025 Bulletin 2025/18**

(73) Titulaire: **COMPAGNIE GENERALE DES ETABLISSEMENTS MICHELIN**
**63000 Clermont-Ferrand (FR)**

(72) Inventeurs:
- **SOUCHARD, Thibaut**
  **63040 CLERMONT-FERRAND CEDEX 09 (FR)**
- **THUILLIEZ, Julien**
  **63040 CLERMONT-FERRAND CEDEX 09 (FR)**
- **NGO, Robert**
  **63040 CLERMONT-FERRAND CEDEX 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2019/180356 WO-A1-2021/023924**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 543 951 B1

Processed by Luminess, 75001 PARIS (FR)

**(Cont. page suivante)**

(52) Classification Coopérative des Brevets (CPC):
(Cont.)

C-Sets
**C08F 210/02, C08F 4/52;**
C08F 210/02, C08F 236/06, C08F 226/08,
C08F 2500/27, C08F 2500/36, C08F 2500/32

## Description

Le domaine de l'invention est celui des procédés de synthèse de polymères à blocs contenant un bloc statistique d'un copolymère diénique riche en éthylène et un bloc homopolymère de polyvinylpyridine.

Les copolymères à base d'éthylène et d'un 1,3-diène présentent des propriétés intéressantes à plus d'un titre. En effet, un des avantages réside dans l'utilisation de l'éthylène pour les fabriquer qui est un monomère courant et disponible sur le marché et accessible à partir de matières fossiles ou à partir de la biomasse. La Demanderesse a décrit des copolymères d'éthylène et de 1,3-diènes tels que le 1,3-butadiène, le myrcène et le β-farnésène qui peuvent être utilisés dans des compositions de caoutchouc pour pneumatique. On peut se référer par exemple aux documents WO 2014114607 A1, WO 2021053051 et WO 2021053296.

Il est toujours d'intérêt de développer de nouveaux procédés qui conduisent à l'obtention de nouveaux polymères en vue de toujours proposer des matériaux différents. Or, il n'est pas connu de polymères à blocs qui résultent de la polymérisation statistique d'un mélange monomère comprenant un 1,3-diène et de l'éthylène et dont l'un des blocs est un homopolymère de vinylpyridine.

La Demanderesse a découvert un procédé qui permet l'introduction d'un bloc polyvinylpyridine dans un copolymère statistique comprenant des unités éthylène et des unités d'un 1,3-diène et qui permet de maîtriser la composition et la longueur respectives des blocs du polymère à blocs. Avec la mise en œuvre du procédé, la synthèse d'une grande variété de polymères à blocs est accessible facilement.

Ainsi un premier objet de l'invention est un procédé de synthèse d'un polymère à blocs comprenant un premier bloc d'un copolymère statistique comprenant des unités d'un 1,3-diène et plus de 50% en mole d'unités éthylène et un deuxième bloc d'un homopolymère de polyvinylpyridine, le pourcentage molaire étant exprimé par rapport au nombre total des unités de répétition constitutives du premier bloc, lequel procédé comprend la copolymérisation d'un mélange monomère contenant de l'éthylène et un 1,3-diène en présence d'un système catalytique, suivie de l'homopolymérisation d'une vinylpyridine,

le système catalytique étant à base au moins d'un métallocène de formule (I) et d'un organomagnésien

$$P(Cp^1Cp^2)Nd(BH_4)_{(1+y)}Li_y(THF)_x \qquad (I)$$

$Cp^1$ et $Cp^2$ étant choisis dans le groupe constitué par le groupe fluorényle et les groupes fluorényles substitués,
P étant un groupe pontant les deux groupes $Cp^1$ et $Cp^2$ et représentant un groupe $ZR^1R^2$,
Z représentant un atome de silicium ou de carbone, $R^1$ et $R^2$, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0.

Un deuxième objet de l'invention est un polymère à blocs contenant un premier bloc et un deuxième bloc, le premier bloc étant un copolymère statistique comprenant des unités d'un 1,3-diène et plus de 50% en mole d'unités éthylène, le pourcentage molaire étant exprimé par rapport au nombre total d'unités de répétition constitutives du premier bloc, le deuxième bloc étant un homopolymère d'une vinylpyridine. Le polymère à blocs est susceptible d'être obtenu par le procédé conforme à l'invention.

Description :

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Sauf indication contraire, les taux des unités dans le premier bloc sont exprimés en pourcentage molaire par rapport à la totalité des unités de répétition constitutives du premier bloc.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Par l'expression « à base de » utilisée pour définir les constituants d'un système catalytique (ou composition catalytique), on entend le mélange de ces constituants, ou le produit de la réaction d'une partie ou de la totalité de ces constituants entre eux.

Le procédé conforme à l'invention est un procédé de polymérisation subséquente. Il comprend la copolymérisation statistique d'un mélange monomère contenant de l'éthylène et un 1,3-diène en présence d'un système catalytique pour former le premier bloc, suivie de l'homopolymérisation d'une vinylpyridine pour former le deuxième bloc. Les polymérisations sont conduites en présence d'un système catalytique qui est à base au moins d'un métallocène de formule (I) et d'un organomagnésien

$$P(Cp^1Cp^2)Nd(BH_4)_{(1+y)}Li_y(THF)_x \qquad (II)$$

Cp[1] et Cp[2] étant choisis dans le groupe constitué par le groupe fluorényle et les groupes fluorényles substitués,
P étant un groupe pontant les deux groupes Cp[1] et Cp[2] et représentant un groupe $ZR^1R^2$,
Z représentant un atome de silicium ou de carbone, $R^1$ et $R^2$, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0.

Dans la formule (I), l'atome de néodyme est relié à une molécule de ligand constitué des deux groupes $Cp^1$ et $Cp^2$ reliés entre eux par le pont P. De préférence, le symbole P, désigné sous le terme de pont, répond à la formule $ZR^1R^2$, Z représentant un atome de silicium ou de carbone, $R^1$ et $R^2$, identiques ou différents, représentant un groupe alkyle comprenant de 1 à 20 atomes de carbone. De manière plus préférentielle, le pont P est de formule $SiR^1R^2$, $R^1$ et $R^2$, étant identiques et tels que définis précédemment. De manière encore plus préférentielle, P répond à la formule $SiMe_2$.

A titre de groupes fluorényles substitués, on peut citer ceux substitués par des groupes alkyles ayant 1 à 6 atomes de carbone ou par des groupes aryles ayant 6 à 12 atomes de carbone ou encore par des groupes trialkylsilyles tels que $SiMe_3$. Lorsque les ligands $Cp^1$ et $Cp^2$ sont substitués, ils sont préférentiellement substitués par des groupes méthyles, par des groupes butyles, notamment tertiobutyles, ou par des groupes triméthylsilyles. Ces groupes sont préférentiels quel que soit le mode de réalisation de l'invention. Le choix des groupes est aussi orienté par l'accessibilité aux molécules correspondantes que sont les fluorènes substitués, parce que ces derniers sont disponibles commercialement ou facilement synthétisables.

A titre de groupes fluorényles substitués, on peut citer particulièrement ceux substitués en position 2, 7, 3 ou 6, plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

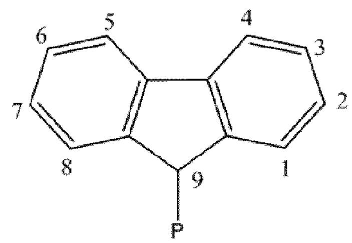

De préférence, $Cp^1$ et $Cp^2$ sont identiques. De manière plus préférentielle, $Cp^1$ et $Cp^2$ représentent chacun un groupe fluorényle. Le groupe fluorényle est de formule $C_{13}H_8$. Selon l'un quelconque des modes de réalisation de l'invention, le métallocène est avantageusement de formule (Ia), (Ib), (Ic), (Id) ou (Ie) dans lesquelles le symbole Flu représente le groupe fluorényle de formule $C_{13}H_8$.

$$[\{Me_2SiFlu_2Nd(\mu\text{-}BH_4)_2Li(THF)\}_2] \qquad (Ia)$$

$$[Me_2SiFlu_2Nd(\mu\text{-}BH_4)_2Li(THF)] \qquad (Ib)$$

$$[Me_2SiFlu_2Nd(\mu\text{-}BH_4)(THF)] \qquad (Ic)$$

$$[\{Me_2SiFlu_2Nd(\mu\text{-}BH_4)(THF)\}_2] \qquad (Id)$$

$$[Me_2SiFlu_2Nd(p\text{-}BH_4)] \qquad (Ie)$$

L'organomagnésien utilisé dans le système catalytique à titre de co-catalyseur est un composé qui présente au moins une liaison C-Mg. A titre de composés organomagnésiens, on peut citer les diorganomagnésiens, en particulier les dialkylmagnésiens et les halogénures d'organomagnésien, en particulier les halogénures d'alkylmagnésien. Un diorganomagnésien est typiquement de formule $MgR^3R^4$ dans laquelle $R^3$ et $R^4$, identiques ou différents, représentent un groupe carboné. On entend par groupe carboné un groupe qui contient un ou plusieurs atomes de carbone. De préférence, $R^3$ et $R^4$ contiennent 2 à 10 atomes de carbone. De manière plus préférentielle, $R^3$ et $R^4$ représentent chacun un alkyle. L'organomagnésien est préférentiellement un diorganomagnésien ou un halogénure d'organomagnésien, avantageusement un dialkylmagnésien, mieux le butyléthylmagnésium ou le butyloctylmagnésium, encore mieux le butyloctylmagnésium.

Le système catalytique peut être préparé de façon traditionnelle par un procédé analogue à celui décrit dans la demande de brevet WO 2007054224 A2 ou WO 2007054223 A2. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère à blocs.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un 1,3-diène, l'éthylène ou un mélange d'éthylène et d'un 1,3-diène, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un 1,3-diène, l'éthylène ou un mélange d'éthylène et d'un 1,3-diène. Le monomère de préformation est préférentiellement le 1,3-butadiène ou un mélange d'éthylène et de 1,3-butadiène. Le système catalytique ainsi obtenu peut être utilisé de suite dans le procédé conforme à l'invention ou être stocké sous atmosphère inerte avant son utilisation dans le procédé de polymérisation pour préparer le polymère à blocs.

Le métallocène utilisé pour préparer le système catalytique peut se trouver sous la forme de poudre cristallisée ou non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 A2; ou WO 2007054223 A2. Le métallocène peut être préparé de façon traditionnelle par un procédé analogue à celui décrit dans la demande de brevet WO 2007054224 A2 ou WO 2007054223 A2, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'homme du métier adapte aussi les conditions de polymérisation et les concentrations en chacun des réactifs (constituants du système catalytique, monomères) selon le matériel (outils, réacteurs) utilisé pour conduire la polymérisation. Comme cela est connu de l'homme du métier, la polymérisation ainsi que la manipulation des monomères, du système catalytique et du ou des solvants de copolymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu, dans un réacteur avantageusement agité. Le solvant de polymérisation peut être un solvant hydrocarboné, aromatique ou aliphatique. A titre d'exemple de solvant de polymérisation, on peut citer le toluène et le méthylcyclohexane. Avantageusement, la polymérisation est conduite en solution dans un solvant hydrocarboné tel que le méthylcyclohexane.

L'homme du métier adapte les conditions de polymérisation telles que la température de polymérisation, la concentration en chacun des réactifs, la pression dans le réacteur en fonction de la composition du mélange monomère, du réacteur de polymérisation, de la microstructure et de la macrostructure souhaitées de la chaîne copolymère.

La synthèse du premier bloc est réalisée par la polymérisation d'un mélange monomère contenant de l'éthylène et un 1,3-diène. L'éthylène présent dans le mélange monomère contenant de l'éthylène et un 1,3-diène représente préférentiellement plus de 50% en mole des monomères du mélange monomère qui contient de l'éthylène et un 1,3-diène. En fonction de la composition souhaitée du premier bloc, l'homme du métier ajuste la composition molaire du mélange monomère contenant de l'éthylène et un 1,3-diène. En particulier, il augmente la teneur en éthylène dans le mélange monomère pour préparer un premier bloc contenant plus de 50% en moles d'unité éthylène. Selon l'un quelconque des modes de réalisation de l'invention, le mélange monomère contenant de l'éthylène et un 1,3-diène est préférentiellement un mélange d'éthylène et d'un 1,3-diène. Lorsque le mélange monomère est un mélange d'éthylène et d'un 1,3-diène, les unités monomères constitutives du premier bloc sont celles résultant de la copolymérisation de l'éthylène et du 1,3-diène.

Selon l'invention, le 1,3-diène utile aux besoins de l'invention est un seul composé, c'est-à-dire un seul (en

anglais « one ») 1,3-diène ou est un mélange de 1,3-diènes qui se différencient les uns des autres par la structure chimique. Conviennent comme 1,3-diène les 1,3-diènes ayant de 4 à 20 atomes de carbone. Le 1,3-diène est de préférence le 1,3-butadiène, l'isoprène, le myrcène, le β-farnésène, leurs mélanges ou un mélange de 1,3-diènes dont un est le 1,3-butadiène. Le 1,3-diène est de manière plus préférentielle le 1,3-butadiène, un mélange de 1,3-butadiène et de myrcène ou un mélange de 1,3-butadiène et de β-farnésène.

Les monomères du mélange contenant de l'éthylène et un 1,3-diène peuvent être introduits dans le réacteur contenant le solvant de polymérisation et le système catalytique ou inversement le système catalytique peut être introduit dans le réacteur contenant le solvant de polymérisation et les monomères.

Selon l'un quelconque des modes de réalisation de l'invention, la température de polymérisation varie généralement dans un domaine allant de 30 à 160°C, préférentiellement de 30 à 120°C. Pendant la synthèse du premier bloc, la température du milieu réactionnel est avantageusement maintenue constante au cours de la polymérisation et la pression totale dans le réacteur est aussi avantageusement maintenue constante. De préférence, la polymérisation du mélange monomère contenant de l'éthylène et un 1,3-diène est conduite à pression constante d'éthylène.

Pour atteindre la macrostructure souhaitée du premier bloc, l'homme du métier adapte les conditions de polymérisation, notamment le rapport molaire de l'organomagnésien sur le métal Nd constituant le métallocène. Le rapport molaire peut atteindre la valeur de 100, sachant qu'un rapport molaire inférieur à 10 est plus favorable pour l'obtention de polymères de masses molaires élevées.

Au cours de la synthèse du premier bloc, un ajout continu des monomères constitutifs du mélange monomère contenant de l'éthylène et un 1,3-diène peut être réalisé dans le réacteur de polymérisation, auquel cas le réacteur de polymérisation est un réacteur alimenté. Ce mode de réalisation est tout particulièrement adapté pour la synthèse d'un premier bloc qui est un copolymère statistique.

La synthèse du premier bloc s'achève en coupant l'alimentation en monomères, notamment par une chute de la pression dans le réacteur, de préférence jusqu'à environ 3 bars. Le milieu réactionnel à l'issue de la synthèse du premier bloc est dégazé, de préférence en procédant à plusieurs reprises à un dégazage avec un gaz inerte, par exemple l'azote. La préparation du polymère à blocs se poursuit avec la synthèse du deuxième bloc par l'homopolymérisation subséquente de la vinylpyridine dans le milieu réactionnel dégazé.

La vinylpyridine peut être un mélange de vinylpyridines ou un des isomères de la vinylpyridine, l'isomérie étant déterminée par le carbone substitué du cycle aromatique de la pyridine. De préférence, la vinylpyridine est la 4-vinylpyridine, la 2-vinylpyridine ou leur mélange. De manière plus préférentielle, la vinylpyridine est la 4-vinylpyridine. Lorsque la vinylpyridine est conditionnée en présence d'un stabilisant, comme c'est le cas pour la plupart des vinylpyridines commerciales, elle est utilisée typiquement après élimination du stabilisant qui peut être réalisée de manière bien connue par distillation ou par contact avec de l'alumine, par exemple par traitement sur des colonnes d'alumine.

La vinylpyridine peut être ajoutée dans le réacteur pure ou diluée dans un solvant hydrocarboné, de préférence aliphatique comme le méthylcyclohexane. La vinylpyridine, pure ou diluée, est introduit dans le milieu réactionnel dégazé. La quantité de vinylpyridine introduite dans le milieu réactionnel qui est à polymériser pour former le deuxième bloc est ajustée par l'homme du métier selon le taux souhaité de vinylpyridine sous la forme de bloc dans le polymère à blocs. Elle peut varier dans une large mesure, en particulier de 0.01 à 25 g pour 100 g de premier bloc formé, plus particulièrement de 2 g à 25 g pour 100 g de premier bloc formé. L'homopolymérisation de la vinylpyridine est conduite de préférence à une température identique à celle de la synthèse du premier bloc. Selon l'un quelconque des modes de réalisation de l'invention, la température de polymérisation pour la synthèse du deuxième bloc varie généralement dans un domaine allant de 30 à 160°C, préférentiellement de 30 à 120°C. La synthèse du deuxième bloc peut être suivie typiquement par analyse chromatographique pour suivre la consommation de la vinylpyridine. La synthèse du deuxième bloc s'achève quand le deuxième bloc atteint la masse molaire moyenne en nombre souhaitée ou quand la conversion de la réaction de polymérisation de la vinylpyridine atteint la conversion souhaitée, par exemple 100%.

La synthèse du deuxième bloc peut être stoppée par refroidissement du milieu de polymérisation ou par ajout d'un alcool, préférentiellement un alcool contenant 1 à 3 atomes de carbone, par exemple l'éthanol. Le polymère à blocs peut être récupéré selon les techniques classiques connues de l'homme du métier comme par exemple par précipitation, par évaporation du solvant sous pression réduite ou par entraînement (ou « stripping ») à la vapeur d'eau.

Le procédé conforme à l'invention permet la synthèse maîtrisée d'un polymère à blocs dans lequel la longueur et la composition respectives des blocs sont contrôlées, notamment par la composition des charges respectives des monomères, par la composition molaire du système catalytique et par le temps de polymérisation.

Le procédé selon l'invention conduit à la synthèse d'un polymère à blocs, autre objet de l'invention, qui contient deux blocs polymères.

Le premier bloc constitutif du polymère à blocs conforme à l'invention a pour caractéristique essentielle d'être un copolymère statistique. Il contient des unités éthylène et des unités d'un 1,3-diène.

De manière connue, on entend par unité éthylène une unité qui a pour motif $-(CH_2-CH_2)-$.Les unités éthylène présentes dans le premier bloc représentent plus de 50% en moles des unités de répétition constitutives du premier bloc.

Les unités éthylène présentes dans le premier bloc représentent préférentiellement au moins 65% en mole des unités de répétition constitutives du premier bloc, plus préférentiellement au moins 80% en mole des unités de répétition constitutives du premier bloc. Selon l'un quelconque des modes de réalisation de l'invention, les unités éthylène présentes dans le premier bloc représentent préférentiellement moins de 97% en mole du nombre total des unités de répétition constitutives du premier bloc, plus préférentiellement moins de 95% en mole du nombre total des unités de répétition constitutives du premier bloc.

Les unités d'un 1,3-diène sont celles résultant de la polymérisation d'un 1,3-diène. De manière connue, un 1,3-diène peut s'insérer dans une chaîne polymère en croissance par une insertion 1,4 ou 1,2 ou encore 3,4 dans le cas de diène substitué comme l'isoprène, le myrcène ou le β-farnésène pour donner lieu respectivement à la formation d'unité du 1,3-diène de configuration 1,4, d'unité du 1,3-diène de configuration 1,2 ou de configuration 3,4. Lorsque le premier bloc contient des unités du 1,3-diène sous la configuration 1,4, les unités 1,4-trans représentent préférentiellement plus de 50% des unités de configuration 1,4, plus préférentiellement plus de 80% des unités de configuration 1,4.

Le 1,3-diène dont les unités monomères sont constitutives du premier bloc est un 1,3-diène tel que défini dans les modes de réalisation décrits du procédé conforme à l'invention.

Selon un mode de réalisation préférentiel de l'invention, le premier bloc contient des unités du 1,3-butadiène. Selon ce mode de réalisation, le 1,3-diène est de préférence le 1,3-butadiène ou un mélange de 1,3-diènes dont un est le 1,3-butadiène. Le 1,3-diène est de manière plus préférentielle le 1,3-butadiène.

Lorsque le 1,3-diène est le 1,3-butadiène ou un mélange de 1,3-diènes dont un est le 1,3-butadiène, le premier bloc contient préférentiellement des motifs 1,2-cyclohexanediyle, également appelés unités 1,2-cyclohexanediyle, de formule suivante.

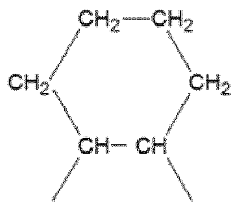

La présence de la structure cyclique dans le premier bloc résulte d'une insertion très particulière de l'éthylène et du 1,3-butadiène lors de leur copolymérisation. Le mécanisme d'obtention d'une telle structure est par exemple décrit dans le document Macromolecules 2009, 42, 3774-3779. La teneur en motif 1,2-cyclohexanediyle dans le premier bloc peut varier selon les conditions de polymérisation pour former le premier bloc, par exemple selon les teneurs respectives en éthylène et en 1,3-butadiène dans le milieu de polymérisation, selon la pression dans le réacteur de polymérisation, selon le système catalytique de polymérisation comme cela est décrit par exemple dans les documents WO 2021023924, WO 2017103543, WO 2018104669. Le taux molaire de motif 1,2-cyclohexanediyle dans le premier bloc varie préférentiellement de 1% à 15% du nombre total des unités de répétition constitutives du premier bloc.

Selon l'un quelconque des modes de réalisation de l'invention, le premier bloc est préférentiellement un copolymère statistique d'éthylène et du 1,3-diène, plus préférentiellement un copolymère statistique d'éthylène et du 1,3-butadiène.

Le deuxième bloc constitutif du polymère à blocs conforme à l'invention a pour caractéristique essentielle d'être un homopolymère d'une vinylpyridine. La vinylpyridine dont les unités monomères sont constitutives du deuxième bloc est une vinylpyridine telle que définie dans les modes de réalisation décrits du procédé conforme à l'invention. De préférence, la vinylpyridine est la 4-vinylpyridine, la 2-vinylpyridine ou leur mélange. De manière plus préférentielle, la vinylpyridine est la 4-vinylpyridine.

Le taux molaire d'unités de la vinylpyridine dans le polymère à blocs peut être inférieur à 1% ou très supérieur à 1% du nombre total des unités de répétition constitutives du premier bloc. Il est préférentiellement supérieur à 0.1% du nombre total des unités de répétition constitutives du premier bloc. Il est préférentiellement inférieur à 50% du nombre total des unités de répétition constitutives du premier bloc, plus préférentiellement inférieur à 30% du nombre total des unités de répétition constitutives du premier bloc.

Le polymère à blocs selon l'invention est préférentiellement un dibloc. Lorsque le polymère à blocs est un dibloc, il est typiquement de formule A-B dans lequel A désigne le premier bloc, B le deuxième bloc.

En résumé, l'invention est mise en œuvre avantageusement selon l'un quelconque des modes de réalisation suivants 1 à 23 :

Mode 1 : Procédé de synthèse d'un polymère à blocs comprenant un premier bloc d'un copolymère statistique comprenant des unités d'un 1,3-diène et plus de 50% en mole d'unités éthylène et un deuxième bloc d'un homopolymère de polyvinylpyridine, le pourcentage molaire étant exprimé par rapport au nombre total des unités

de répétition constitutives du premier bloc, lequel procédé comprend la copolymérisation d'un mélange monomère contenant de l'éthylène et un 1,3-diène en présence d'un système catalytique, suivie de l'homopolymérisation d'une vinylpyridine, le système catalytique étant à base au moins d'un métallocène de formule (I) et d'un organomagnésien

$$P(Cp^1Cp^2)Nd(BH_4)_{(1+y)}Li_y(THF)_x \qquad (I)$$

$Cp^1$ et $Cp^2$ étant choisis dans le groupe constitué par le groupe fluorényle et les groupes fluorényles substitués,
P étant un groupe pontant les deux groupes $Cp^1$ et $Cp^2$ et représentant un groupe $ZR^1R^2$,
Z représentant un atome de silicium ou de carbone, $R^1$ et $R^2$, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0.

Mode 2 : Procédé selon le mode 1 dans lequel le 1,3-diène est le 1,3-butadiène, l'isoprène, le myrcène, le β-farnésène, leurs mélanges ou un mélange de 1,3-diènes dont un est le 1,3-butadiène.
Mode 3 : Procédé selon le mode 1 ou 2 dans lequel le 1,3-diène est le 1,3-butadiène, un mélange de 1,3-butadiène et de myrcène ou un mélange de 1,3-butadiène et de β-farnésène.
Mode 4 : Procédé selon l'un quelconque des modes 1 à 3 dans lequel le mélange monomère contenant de l'éthylène et un 1,3-diène est un mélange d'éthylène et d'un 1-3-diène.
Mode 5 : Procédé selon l'un quelconque des modes 1 à 4 dans lequel $Cp^1$ et $Cp^2$ sont identiques et représentent chacun un groupe fluorényle.
Mode 6 : Procédé selon l'un quelconque des modes 1 à 5 dans lequel P répond à la formule $SiMe_2$.
Mode 7 : Procédé selon l'un quelconque des modes 1 à 6 dans lequel l'organomagnésien est un diorganomagnésien ou un halogénure d'organomagnésien.
Mode 8 : Procédé selon l'un quelconque des modes 1 à 7 dans lequel l'organomagnésien est un dialkylmagnésien.
Mode 9 : Procédé selon l'un quelconque des modes 1 à 8 dans lequel l'organomagnésien est le butyléthylmagnésium ou le butyloctylmagnésium.
Mode 10 : Procédé selon l'un quelconque des modes 1 à 9 dans lequel la vinylpyridine est la 4-vinylpyridine, la 2-vinylpyridine ou leur mélange.
Mode 11 : Procédé selon l'un quelconque des modes 1 à 10 dans lequel la quantité de vinylpyridine à polymériser pour former le deuxième bloc varie de 0.01 à 25 g pour 100 g de premier bloc.
Mode 12 : Procédé selon l'un quelconque des modes 1 à 11 dans lequel la quantité de vinylpyridine à polymériser pour former le deuxième bloc varie de 2 g à 25 g pour 100 g de premier bloc.
Mode 13 : Polymère à blocs contenant un premier bloc et un deuxième bloc, le premier bloc étant un copolymère statistique comprenant des unités d'un 1,3-diène et plus de 50% en mole d'unités éthylène, le pourcentage molaire étant exprimé par rapport au nombre total d'unités de répétition constitutives du premier bloc, le deuxième bloc étant un homopolymère d'une vinylpyridine.
Mode 14 : Polymère à blocs selon le mode 13 dans lequel les unités éthylène présentes dans le premier bloc représentent au moins 65% en mole des unités de répétition constitutives du premier bloc.
Mode 15 : Polymère à blocs selon le mode 13 ou 14 dans lequel les unités éthylène présentes dans le premier bloc représentent au moins 80% en mole des unités de répétition constitutives du premier bloc.
Mode 16 : Polymère à blocs selon l'un quelconque des modes 13 à 15 dans lequel le premier bloc est un copolymère statistique d'éthylène et d'un 1,3-diène.
Mode 17 : Polymère à blocs selon l'un quelconque des modes 13 à 16 dans lequel le premier bloc est un copolymère statistique d'éthylène et du 1,3-butadiène.
Mode 18 : Polymère à blocs selon l'un quelconque des modes 13 à 17 dans lequel le premier bloc contient des motifs 1,2-cyclohexanediyle.
Mode 19 : Polymère à blocs selon le mode 18 dans lequel le taux molaire de motif 1,2-cyclohexanediyle dans le premier bloc varie de 1 à 15% du nombre total des unités de répétition constitutives du premier bloc.
Mode 20 : Polymère à blocs selon l'un quelconque des modes 13 à 19 dans lequel la vinylpyridine est la 4-vinylpyridine, la 2-vinylpyridine ou leur mélange.
Mode 21 : Polymère à blocs selon l'un quelconque des modes 13 à 20 dans lequel le taux molaire d'unités de la vinylpyridine est supérieur à 0.1% du nombre total des unités de répétition constitutives du premier bloc et inférieur à 50% du nombre total des unités de répétition constitutives du premier bloc.
Mode 22 : Polymère à blocs selon l'un quelconque des modes 13 à 21 dans lequel le taux molaire d'unités de la vinylpyridine est supérieur à 0.1% du nombre total des unités de répétition constitutives du premier bloc et inférieur à 30% du nombre total des unités de répétition constitutives du premier bloc.
Mode 23 : Polymère à blocs selon l'un quelconque des modes 13 à 22 lequel polymère est un dibloc.

## Exemples

Détermination de la microstructure des polymères :

Pour des polymères possédant des taux d'éthylène inférieure ou égale à 90% molaire :

La spectroscopie RMN haute résolution des polymères a été effectuée sur un spectromètre Bruker 500 Avance III HD opérant à 500 MHz équipé d'une sonde CP2 BB-1H/D Z-GRD pour le proton. Les acquisitions sont faites à 293 K. Le chloroforme deutéré ($CDCl_3$) est utilisé comme solvant. Les échantillons ont été analysés à une concentration d'environ 1 % en masse pour les analyses en RMN du proton (RMN $^1H$). Les déplacements chimiques sont déterminés relativement au signal proton du chloroforme deutéré fixé à 7,2 ppm. des analyses 2D ont été réalisées en utilisant la séquence suivante : **HSQC** : Pulse program ; hsqcedetgpsp; SW1 : 165 ppm ($^{13}C$) SW2 : 12 ppm ($^1H$) ; d1 : 5 s ; Gradient : SMSQ10.100 et **HMBC** : hmbcgpndqfbaseopt; SW1 : 220 ppm ($^{13}C$) SW2 : 12 ppm ($^1H$) ; d1 : 5 s ; Gradient : SMSQ10.100

Pour des polymères possédant des taux d'éthylène supérieure à 90% molaire :

La spectroscopie RMN haute résolution des polymères a été effectuée sur un spectromètre Bruker 600 Avance III HD opérant à 600 MHz équipé d'une sonde CP2.1 BBO 600S3 pour le proton. Les acquisitions sont faites à 368 K. L'orthodichlorobenzene (o-DCB) est utilisé comme solvant. Les échantillons ont été analysés à une concentration d'environ 1 % en masse pour les analyses en RMN du proton (RMN $^1H$). Les déplacements chimiques sont déterminés relativement au signal proton de l'orthodichlorobenzène fixé à 7,2 ppm. Une analyse 2D a été réalisée en utilisant la séquence suivante : **HSQC** : Pulse program ; hsqcetgpsi2 « HSQC avec gradients » ; SW1 : 180 ppm ($^{13}C$) SW2 : 12 ppm ($^1H$) ; d1 : 10 s ; Impulsion 90 ° « hard » $^1H$ P1 = 13 $\mu$s et 16 W et $^{13}C$ P2 = 26 $\mu$s et 84 W ; Gradient : SMSQ10.100.

L'attribution des signaux caractéristiques du premier bloc est définie dans la littérature, selon l'article de Llauro et al., Macromolecules 2001, 34, 6304-6311.

L'attribution des signaux caractéristiques du deuxième bloc est définie comme suit $\delta^1H$ = 8.29ppm (=C**H**-N=C**H**-) ; $\delta^1H$ = 6.34ppm (=C**H**-C($CH_2$)=C**H**-) ; $8^{13}C$ = 150ppm (=**C**H-N=**C**H-) ; $\delta^{13}C$ = 6.34ppm (=**C**H-C($CH_2$)=**C**H-)

Analyse RMN DOSY (diffusion ordered spectroscopy) des polymères à blocs :

L'expérience DOSY, méthode RMN, permet d'analyser des mélanges complexes et la détection de traces. Le but de cette expérience est de démontrer que le polymère à blocs représente l'essentiel de l'échantillon et que la présence d'homopolymère est très faible ou absente.

L'analyse par RMN DOSY permet de séparer les espèces présentes, notamment des matrices polymères, par analyse de leur coefficient de diffusion en solution. Le principe de la technique est le suivant :

L'expérience DOSY consiste à enregistrer des spectres protons en faisant varier la force G des gradients appliquée et ainsi, la force de diffusion. Une augmentation linéaire de l'intensité des gradients va entrainer une décroissance exponentielle de l'intensité du signal RMN. L'expérience DOSY va donner une carte bidimensionnelle. La 2ème dimension F2 de la DOSY correspond, après traitement par la transformée de Fourier, à la dimension 1H. La 1ère dimension F1 correspond à la décroissance du signal RMN en fonction de la force gradient appliquée. Apres traitement de la dimension F2, on extrait le coefficient de diffusion à partir de l'équation (1), et on obtient une carte DOSY.

$$I=I0.\exp(-D\gamma^2\ G^2\ \delta^2\ (\Delta-\delta/3))\ (1)$$

où I est l'intensité observée, I0 l'intensité de référence, D le coefficient de diffusion, $\gamma$ le ratio gyromagnétique du noyau observé, G la force du gradient, $\delta$ la longueur du gradient et $\Delta$ le temps de diffusion.

Si les deux matrices ont un coefficient de diffusion identique, cela signifie que les deux matrices ont le même rayon hydrodynamique, et sont donc greffées. En revanche, si les deux matrices présentent deux coefficients de diffusion différents, cela signifie qu'elles sont libres l'une de l'autre.

L'équation qui décrit le coefficient de diffusion est la suivante :

$$D = \frac{k_B T}{6\pi\eta rs}$$

dans laquelle $k_B$ est la constante de Boltzman, T la température, $\eta$ la viscosité du liquide dans lequel est la molécule, rs le rayon hydrodynamique de la molécule (en l'espèce la matrice ou le polymère).

L'expérience a été conduit sur des échantillons de poly(butadiène-b-poly(éthylène-co-butadiène) synthétisé

selon le procédé conforme à l'invention. L'enregistrement de deux spectres RMN 1D 1H avec un filtre de diffusion, l'un avec un gradient de champs magnétiques fixé à 90% de la puissance maximale de l'amplificateur gradient et l'autre à 1% de cette valeur, permet par comparaison avec le spectre RMN 1H d'observer la part de perte de signal due à de la diffusion spatiale des molécules et à la relaxation de l'aimantation. La perte de signal due à de la diffusion est alors attribuée à des « petites molécules » non greffées à la matrice polymère (réactifs, antioxydants, solvants, ...).

Détermination de la macrostructure des polymères :

Pour des polymères possédant des taux d'éthylène inférieure ou égale à 90% molaire : Méthode SEC -3D

a) Principe de la mesure :

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.
Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (D = Mw/Mn, également désigné par Ip, indice de polydispersité) peuvent également être calculées.

b) Préparation du polymère :

Chaque échantillon est solubilisé dans du tétrahydrofuranne stabilisé avec du butylhydroxytoluène (+ 1%vol. de diisopropylamine + 1%vol. de triéthylamine) à une concentration d'environ 1 g/L. Puis la solution est filtrée sur filtre de porosité 0.45μm avant injection.

c) Analyse SEC 3D :

Pour déterminer la masse molaire moyenne en nombre (Mn), et le cas échant la masse molaire moyenne en poids (Mw) et l'indice de polydispersité (Ip) des constituants utilisables dans les compositions conformes à l'invention, on utilise la méthode ci-dessous.
La masse molaire moyenne en nombre (Mn), la masse molaire moyenne en poids (Mw) et l'indice de polydispersité du constituant à tester (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.
L'appareillage utilisé est un chromatographe « WATERS Alliance ». Le solvant d'élution est du tétrahydrofuranne (+ 1%vol. de diisopropylamine + 1%vol. de triéthylamine), le débit de 1 mL/min, la température du système de 35°C. On utilise un jeu de trois colonnes POLYMER LABORATORIES en série, de dénominations commerciales « PL gel mixed B LS ».
Le volume injecté de la solution de l'échantillon de polymère est 100 μL. Le système de détection utilisé est le « TDA 302 de VISCOTEK », il est composé d'un réfractomètre différentiel, d'un viscosimètre différentiel et d'un détecteur de diffusion de la lumière à 90°. Pour ces 3 détecteurs, la longueur d'onde est de 670 nm. Pour le calcul des masses molaires moyennes est intégrée la valeur de l'incrément d'indice de réfraction dn/dC de la solution de polymère, valeur préalablement définie dans du tétrahydrofuranne (+ 1%vol. de diisopropylamine + 1%vol. de triéthylamine) à 35 °C et 670 nm. Le logiciel d'exploitation des données est le système « OMNISEC de VISCOTEK».

Pour des polymères possédant des taux d'éthylène supérieure à 90% molaire :

On utilise la chromatographie d'exclusion stérique (Size Exclusion Chromatography). On rappelle que la SEC permet de séparer les macromolécules en solution suivant leur taille à travers des colonnes remplies d'un gel poreux. Les macromolécules sont séparées suivant leur volume hydrodynamique, les plus volumineuses étant éluées en premier.
Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et la dispersité (D = Mw/Mn) calculé via un étalonnage dit de MOORE.
Préparation du polymère : Il n'y a pas de traitement particulier de l'échantillon de polymère avant analyse. Celui-ci est simplement solubilisé, dans du 1,2,4-trichlorobenzène contenant 300 ppm de BHT (« butylated hydroxytoluene » ou hydroxytoluène butylé), à une concentration d'environ 1 g/l. La solution est agitée pendant 10min à 160°C avant injection, l'appareil chromatographe utilisé est équipé d'un système de filtration en ligne.

Analyse SEC : On utilise la chromatographie d'exclusion stérique à haute température ou SEC-HT. L'appareillage utilisé est un chromatographe «GPC-IR» équipé d'un détecteur à infrarouge « IR-6 » de « Polymer Char ». La détection est effectuée par le détecteur IR sur les bandes de vibrations des groupements $CH_2$ et $CH_3$. On utilise un jeu de 3 colonnes de référence commerciale « Mixed-BLS » de « Polymer Char ». Le solvant d'élution est du 1,2,4-trichlorobenzène contenant 300 ppm de BHT. Le débit est de 1mL/min, la température du système est de 160°C et la durée d'analyse de 60 minutes.

Le volume injecté de la solution de l'échantillon de polymère est 200 μl. Le logiciel d'exploitation des données chromatographiques est le système « GPC-one » de « Polymer Char ».

Les masses molaires moyennes sont déterminées à partir d'une courbe d'étalonnage réalisée à partir de polystyrènes étalons commerciaux « PSS READY CAL-KIT».

Détermination du taux de cristallinité des polymères, de leur point de fusion et de leur température de transition vitreuse :

Le taux de cristallinité, le point de fusion et la température de transition vitreuse sont déterminés par analyse calorimétrique différentielle (DSC). Les analyses sont effectuées sur un appareil DSC « NETZSCH DSC 214 Polyma » calibré à l'indium. Cet appareil dispose d'une plage de température allant de -150 à 700 °C. Un ordinateur intégré à la DSC pilote l'appareil à l'aide du logiciel Proteus de chez Netzsch. L'échantillon (10 mg environ) est pesé et scellé dans un creuset en aluminium de 40 μL. Le creuset est percé avec une fine aiguille juste avant la mesure. Les échantillons sont analysés sous hélium à 40 mL/min suivant une méthode dynamique comportant 7 paliers de température :
Palier 1 : refroidissement de 25°C à -150°C à 50°C/min ; Palier 2 : isotherme à -150°C pendant 5 min ; Palier 3 : chauffage de -150°C à 200°C à 20°C/min ; Palier 4 : isotherme à 200°C pendant 5 min ; Palier 5 : refroidissement de 200°C à -150°C à 20°C/min ; Palier 6 : isotherme à -150°C pendant 5 minutes ; Palier 7 : chauffage de -150°C à 200°C à 20°C/min.

Les quatre premiers paliers permettent d'effacer le passé thermique de l'échantillon. Les mesures de la température de transition vitreuse (Tg) et de la température de fusion (Tf) se font sur le 7$^{ème}$ palier. Le 7$^{ème}$ palier est également conservé pour obtenir des informations sur la cristallisation de l'échantillon et déterminer le taux de cristallinité. Les valeurs de Tg et de Tf sont déterminées en appliquant le retraitement de données du logiciel « Proteus » de chez « Netzsch ». Le taux de cristallinité est déterminé en utilisant la norme ISO 11357-3 : 2011 pour mesurer la température et l'enthalpie de fusion et de cristallisation des polymères utilisés par analyse calorimétrique différentielle (DSC). L'enthalpie de référence du polyéthylène est de 293 J/g (source : B. Wunderlich, Thermal analysis, Academic Press, 1990, 281).

Synthèse des polymères :

Tous les réactifs sont obtenus commercialement excepté le métallocène $[\{Me_2SiFlu_2Nd(\mu\text{-}BH_4)_2Li(THF)\}]$ qui est préparé selon le mode opératoire décrit dans les demandes de brevet WO 2007054224.

Le butyloctylmagnésium BOMAG (20% en masse dans l'heptane, C = 0,88 mol $L^{-1}$) provient de Lanxess et est stocké dans une bonbonne métallique sous atmosphère inerte. L'éthylène, de qualité N35, provient de la société Air Liquide et est utilisé sans purification préalable. Le 1,3-butadiène est purifié sur gardes d'alumine. Le myrcène (pureté fournisseur : ≥ 90%) provient du fournisseur DRT et est purifié sur garde d'alumine. Le solvant méthylcyclohexane provenant de chez BioSolve est séché et purifié sur colonne d'alumine dans une fontaine à solvant provenant de chez mBraun et utilisé en atmosphère inerte. Toutes les réactions sont effectuées en atmosphère inerte.

Purification du 4-vinylpyridine :

La 4-vinylpyridine purifiée est préparé selon le mode opératoire suivant :
100 mL de 4-vinylpyridine (Sigma-Aldrich, 95% de pureté, contenant 100 ppm d'hydroquinone) sont placés dans une bouteille Steinie. 30g d'alumine sont introduites dans la bouteille. La bouteille est alors capsulée et agitée pendant 30 minutes à température ambiante (23°C) à l'abri de la lumière.

Préparation d'une solution de 4-vinylpyridine dans le méthylcyclohexane :

Avant toute utilisation pour préparer des solutions, le méthylcyclohexane (MCH) est purifié par passage sur des gardes d'alumine.

Une première solution de 4-vinylpyridine dans le MCH, solution A, est préparée en introduisant 0.26 mL de 4-vinylpyridine purifié dans 20 mL de MCH contenus dans une bouteille Steinie de 250 mL capsulée et mise sous pression d'azote.

Une deuxième solution de 4-vinylpyridine dans le MCH, solution B, est préparée en introduisant 0.65 mL de 4-vinylpyridine purifié dans 20 mL de MCH contenus dans une bouteille Steinie de 250 mL capsulée et mise sous pression

d'azote.

Les bouteilles contenant les solutions A et B respectivement sont mises sous pression à 3 bars d'azote.

Exemple 1 : Préparation d'un polymère à blocs conforme à l'invention :

30.4 mg (47.5 μmol) du métallocène $Me_2Si(C_{13}H_8)_2Nd(BH_4)_2Li.THF$ sont pesés dans une bouteille Steinie de 250 mL en boîte à gants.

296 mL de MCH sont introduits dans une bouteille Steinie de 750 mL. La bouteille est mise sous atmosphère inerte par un bullage à l'azote pendant 10 minutes. 4.57mL (499 μmol, Mg/Nd = 10.5) d'une solution de butyloctylmagnésium à 0.11 mol/L dans le MCH sont introduits dans la bouteille de 750 mL contenant le MCH pour former une solution C.

On prépare aussi un mélange monomère d'éthylène et de 1,3-butadiène contenant 92% molaire d'éthylène et 8% molaire de 1,3-butadiène en injectant dans un ballast d'abord 0.48 bar de 1,3-butadiène, puis 5.52 bars d'éthylène pour compléter le mélange gazeux. On obtient 6 bars absolu d'un mélange à 92% molaire d'éthylène et 8% molaire de 1,3-butadiène (mélange éthylène/1,3-butadiène : 92/8).

Le ballast est relié à un réacteur de polymérisation.

Environ un tiers de la solution C est transférée dans la bouteille de 250 mL contenant le métallocène par l'intermédiaire d'une canule pour activer le métallocène et former le système catalytique.

La moitié de la solution C est introduite dans le réacteur agité (à 400 tours par minute) et porté à 77°C, le réacteur étant mis au préalable sous atmosphère inerte. Le contenu de la bouteille de 250 mL contenant le système catalytique est introduit dans le réacteur. Le reste de la solution C est ensuite transféré dans le réacteur. Le réacteur est dégazé sous vide jusqu'à formation de bulles de gaz, puis pressurisé à 3 bars avec le mélange éthylène/1,3-butadiène : 92/8.

Lorsque la pression du ballast affiche une chute de pression correspondant à 12.7 g de monomères, le réacteur est dégazé avec 3 cycles évent/azote.

La solution A contenant la 4-vinylpyridine est introduite dans le réacteur. L'agitation est maintenue pendant 1 heure, puis le chauffage est coupé et l'agitation arrêtée.

Le réacteur est démonté, le milieu de polymérisation est désactivé avec 2 mL d'éthanol pour stopper la réaction de polymérisation, puis transféré dans une barquette en aluminium et séché sous vide à 60°C dans une étuve pendant 24 h. Le polymère récupéré est blanc et opaque.

Après 24h, le polymère sec est récupéré pour les analyses. Le polymère à blocs est un dibloc contenant un premier bloc d'un copolymère statistique d'éthylène et de 1,3-butadiène et un deuxième bloc de poly(4-vinylpyridine).

Le premier bloc du polymère à blocs contient 91% en mole d'unité éthylène, 6% en mole d'unité 1,2-cyclohexanediyle, 1% en mole d'unité du 1,3-butadiène sous la configuration 1,2 et 2% en mole d'unité du 1,3-butadiène sous la configuration 1,4, majoritairement 1,4-trans. Le taux molaire d'unités de la 4-vinylpyridine est de 0.5 % en mole du nombre total d'unités éthylène, d'unités du 1,2-cyclohexanediyle, d'unités du 1,3-butadiène sous la configuration 1,2 et d'unités du 1,3-butadiène sous la configuration 1,4-trans.

Le polymère à blocs, analysé par SEC/HT, présente une masse molaire moyenne en nombre de 12500 g/mol et un indice de dispersité de 1.88.

La masse pesée de polymère à blocs permet de déterminer l'activité catalytique moyenne du système catalytique exprimée en kilogramme de polymère synthétisé par mole de métal néodyme et par heure (kg/mol.h). L'activité catalytique est de 182 kg.mol/h.

La Tg du 1^er^ bloc est à -25°C avec une cristallinité de 26%. La Tg du bloc polyvinylpyridine est de 160°C.

Exemple 2 : Préparation d'un polymère à blocs conforme à l'invention :

Un polymère à blocs est préparé selon un mode opératoire identique à celui de l'exemple 1 à la différence près que la solution A est remplacée par la solution B.

Le premier bloc du polymère à blocs contient 92% en mole d'unités éthylène, 5% en mole d'unités 1,2-cyclohexanediyle, 1% en mole d'unités du 1,3-butadiène sous la configuration 1,2 et 2% en mole d'unités du 1,3-butadiène sous la configuration 1,4, majoritairement 1,4-trans. Le taux molaire d'unités de la 4-vinylpyridine est de 1.4% en mole du nombre total d'unités éthylène, d'unités du 1,2-cyclohexanediyle, d'unités du 1,3-butadiène sous la configuration 1,2 et d'unités du 1,3-butadiène sous la configuration 1,4, majoritairement 1,4-trans.

Le polymère à blocs, analysé par SEC/HT, présente une masse molaire moyenne en nombre de 12000 g/mol et un indice de dispersité de 1.9.

La masse pesée de polymère à blocs permet de déterminer l'activité catalytique moyenne du système catalytique exprimée en kilogramme de polymère synthétisé par mole de métal néodyme et par heure (kg/mol.h). L'activité catalytique est de 214 kg.mol/h.

La Tg du bloc polyvinylpyridine est de 160°C. La cristallinité du polymère à blocs est de 36.8%.

Exemple 3 : Préparation d'un polymère à blocs conforme à l'invention

100 mL d'une solution butyloctylmagnésium dans le MCH à 0.0009 mol/L sont introduits dans un réacteur en verre de 500 mL préalablement conditionné sous atmosphère inerte.

47.3 mg de métallocène [{$Me_2SiFlu_2Nd(\mu-BH_4)_2Li(THF)$}] (74$\mu$mol) est pesé en boite à gant dans une bouteille steinie de 250 mL. 100 mL de butyloctylmagnésium à 0.0009 mol/L est introduit dans la bouteille Steinie contenant le métallocène. Cette solution contenant le métallocène et le butyloctylmagnésium dans le MCH est introduite dans le réacteur sous agitation. 100 mL supplémentaires de butyloctylmagnésium dans le MCH à 0.0009 mol/L sont utilisés pour rincer la bouteille Steinie ayant contenu le métallocène, puis introduits dans le réacteur agité.

Le réacteur est ensuite conditionné sous vide, puis un mélange gazeux contenant 20% molaire de 1,3-butadiène et 80% molaire d'éthylène est introduit dans le réacteur. La polymérisation est conduite à 80°C et à une pression initiale de 4 bars absolue dans le réacteur agité.

Après une consommation d'environ 10 g de monomères, l'alimentation en monomère gazeux est stoppée et le milieu réactionnel est dégazé en ouvrant les évents du réacteur jusqu'à atteindre une pression dans le réacteur de 1.1 bar relatif. Le réacteur est ensuite rempli en azote jusqu'à 3 bar relatif. Le cycle évent/azote est reproduit 3 fois pour assurer l'évacuation de la majorité des monomères gazeux.

3.2 mL de 4-vinylpyridine (29.7 mmol) en solution dans 20 mL de MCH, préalablement dégazé à l'azote, est introduit dans le réacteur sous agitation. La température dans le réacteur est maintenue pendant 1h à 80°C puis le chauffage est coupé et l'agitation arrêtée.

Le réacteur est démonté, le milieu de polymérisation est désactivé avec 2 mL d'éthanol pour stopper la réaction de polymérisation. La solution de polymère est anti-oxydé, puis transférée dans une barquette en aluminium et séchée sous vide à 60°C et balayage d'azote dans une étuve pendant 24 h.

La masse pesée de polymère à blocs permet de déterminer l'activité catalytique moyenne du système catalytique exprimée en kilogramme de polymère synthétisé par mole de métal néodyme et par heure (kg/mol.h). L'activité catalytique est de 239 Kg/mol.h.

Le premier bloc du polymère à blocs contient 90% en mole d'unités éthylène, 4% en mole d'unités 1,2-cyclohexanediyle, 2% en mole d'unités du 1,3-butadiène sous la configuration 1,2 et 4% en mole d'unités du 1,3-butadiène sous la configuration 1,4. Le taux molaire d'unités de la 4-vinylpyridine est de 17.3% en mole du nombre total d'unités éthylène, d'unités du 1,2-cyclohexanediyle, d'unités du 1,3-butadiène sous la configuration 1,2 et d'unités du 1,3-butadiène sous la configuration 1,4-trans. L'analyse RMN DOSY montre bien que le 1$^{er}$ bloc EBR et le deuxième bloc polyvinylpyridine possèdent un même coefficient d'extinction confirmant l'obtention d'un polymère à blocs. L'analyse SEC/3D du polymère montre une distribution moléculaire monomodale, et une Mn de 48200 g/mol avec une dispersité de 1.4. Les analyses RMN DOSY et SEC/3D confirment l'obtention majoritaire d'un polymère à blocs. La Tg du 1$^{er}$ bloc à -36°C avec une cristallinité de 1.8%. La Tg du bloc polyvinylpyridine est de 160°C.

Exemple 4 : Préparation d'un polymère à blocs conforme à l'invention

Un polymère à blocs est préparé selon un mode opératoire identique à celui de l'exemple 3 à la différence près que 1.3 mL de 4-vinylpyridine au lieu des 3.2 mL sont introduits dans le réacteur.

La solution de polymère est ensuite séchée dans une étuve sous vide à 60°C et sous balayage d'azote pendant 24h.

La masse pesée permet de déterminer l'activité catalytique moyenne du système catalytique exprimée en kilogramme de polymère synthétisé par mole de métal néodyme et par heure (kg/mol.h). L'activité catalytique est de 159 Kg/mol.h

Le premier bloc du polymère à blocs contient 80% en mole d'unités éthylène, 10% en mole d'unités 1,2-cyclohexanediyle, 5% en mole d'unités du 1,3-butadiène sous la configuration 1,2 et 5% en mole d'unités du 1,3-butadiène sous la configuration 1,4. Le taux molaire d'unités de la 4-vinylpyridine est de 7% en mole du nombre total d'unités éthylène, d'unités du 1,2-cyclohexanediyle, d'unités du 1,3-butadiène sous la configuration 1,2 et d'unités du 1,3-butadiène sous la configuration 1,4-trans. L'analyse RMN avec l'application d'un filtre de diffusion montre bien que le 1$^{er}$ bloc EBR et le deuxième bloc polyvinylpyridine ne diffusent pas et possèdent le même coefficient d'extinction confirmant l'obtention d'un polymère à blocs. L'analyse SEC/3D du polymère montre une distribution moléculaire monomodale, et une Mn de 42700g/mol avec une dispersité de 1.2. Les analyses RMN DOSY et SEC/3D confirment l'obtention majoritaire d'un polymère à blocs. La Tg du 1$^{er}$ bloc est à -35°C avec une cristallinité de 1.9%. La Tg du bloc polyvinylpyridine est de 160°C.

Exemple 5 : Préparation d'un copolymère statistique éthylène-1,3-butadiène, non conforme à l'invention :

Un polymère est préparé selon un mode opératoire identique à celui de l'exemple 1 à la différence qu'aucune

solution de vinylpyridine n'est ajoutée après la copolymérisation de l'éthylène et du 1,3-butadiène. Lorsque la pression du ballast affiche une chute de pression correspondant à 12.7 g de monomères, le réacteur est dégazé avec 3 cycles évent/azote et le mélange stoppé avec 2mL d'éthanol.

La solution de polymère est ensuite séchée dans une étuve sous vide à 60°C et sous balayage d'azote pendant 24h.

La masse pesée de copolymère permet de déterminer l'activité catalytique moyenne du système catalytique exprimée en kilogramme de polymère synthétisé par mole de métal néodyme et par heure (kg/mol.h). L'activité catalytique est de 191 Kg/mol.h.

L'analyse SEC HT du copolymère montre une distribution moléculaire monomodale, et une Mn de 11 800 g/mol avec une dispersité de 1.87.

Le copolymère d'éthylène et de 1,3-butadiène contient 91% en mole d'unité éthylène, 6% en mole d'unité 1,2-cyclohexanediyle, 1% en mole d'unité du 1,3-butadiène sous la configuration 1,2 et 2% en mole d'unité du 1,3-butadiène sous la configuration 1,4.

La Tg du copolymère d'éthylène et de 1,3-butadiène est à -21°C. Le thermogramme DSC montre un phénomène endothermique au passage de la température de transition (-21°C) identique à celui de l'exemple 1.

L'exemple 5 est un exemple témoin, puisqu'il correspond à la synthèse du premier bloc de l'exemple 1.

Exemple 6 : Préparation d'un polymère à blocs conforme à l'invention

32 mg (50 µmol) du métallocène $Me_2Si(C_{13}H_8)_2Nd(BH_4)_2Li.THF$ sont pesés dans une bouteille Steinie de 250 mL en boîte à gants.

298 mL de MCH sont introduits dans une bouteille Steinie de 750 mL. La bouteille est mise sous atmosphère inerte par un bullage à l'azote pendant 10 minutes. 0.51 mL (100.1 µmol, Mg/Nd = 2) d'une solution de butyloctylmagnésium à 0.22 mol/L dans le MCH sont introduits dans la bouteille de 750 mL contenant le MCH pour former une solution C.

On prépare aussi un mélange monomère d'éthylène et de 1,3-butadiène contenant 80% molaire d'éthylène et 20% molaire de 1,3-butadiène en injectant dans un ballast d'abord 1.2 bar de 1,3-butadiène, puis 4.8 bars d'éthylène pour compléter le mélange gazeux. On obtient 6 bars absolus d'un mélange à 80% molaire d'éthylène et 20% molaire de 1,3-butadiène (mélange éthylène/1,3-butadiène : 80/20).

Le ballast est relié à un réacteur de polymérisation.

Dans ce réacteur de polymérisation, préalablement dégazé à l'azote et chauffé à 80°C, est introduit 1/3 de la solution C.

1/3 de la solution C est ensuite introduit dans la bouteille contenant le métallocène. Cette solution est ensuite introduite dans le réacteur de polymérisation suivi du dernier 1/3 de la solution C.

À 80°C, 10 mL (58 mmol) de myrcène est introduit dans le réacteur puis est conditionné sous vide puis un mélange gazeux contenant 20% molaire de 1,3-butadiène et 80% molaire d'éthylène est introduit dans le réacteur. La polymérisation est conduite à 80°C et à une pression initiale de 4 bars absolus dans le réacteur agité.

Après une consommation d'environ 10 g de monomères gazeux, 7mL (40 mmol) de myrcène sont introduits dans le réacteur de polymérisation qui est ensuite conditionné sous vide, puis un mélange gazeux contenant 20% molaire de 1,3-butadiène et 80% molaire d'éthylène est de nouveau introduit dans le réacteur. L'alimentation en monomère gazeux est stoppée après une consommation de 12.7 g de monomère gazeux et le milieu réactionnel est dégazé en ouvrant les évents du réacteur jusqu'à atteindre une pression dans le réacteur de 1.1 bar relatif. Le réacteur est ensuite rempli en azote jusqu'à 3 bars relatifs. Le cycle évent/azote est reproduit 3 fois pour assurer l'évacuation de la majorité des monomères gazeux.

0.47 g de 4-vinylpyridine (4.5 mmol) en solution dans 10 mL de MCH, préalablement dégazé à l'azote, est introduit dans le réacteur sous agitation. La température dans le réacteur est maintenue pendant 1h à 80°C puis le chauffage est coupé et l'agitation arrêtée.

Le réacteur est démonté, le milieu de polymérisation est désactivé avec 2 mL d'éthanol pour stopper la réaction de polymérisation.

La solution de polymère est ensuite séchée dans une étuve sous vide à 60°C et sous balayage d'azote pendant 24h.

La masse pesée de polymère à blocs permet de déterminer l'activité catalytique moyenne du système catalytique exprimée en kilogramme de polymère synthétisé par mole de métal néodyme et par heure (kg/mol.h). L'activité catalytique est de 234 Kg/mol.h.

L'analyse SEC 3D du copolymère montre une Mn : 88 000g/mol ; dispersité : 1.4 représentant 94% de la masse récupérée de polymère.

Le terpolymère d'éthylène, de 1,3-butadiène et de myrcène contient 73% en mole d'unité éthylène, 4% en mole d'unité 1,2-cyclohexanediyle, 2% en mole d'unité du 1,3-butadiène sous la configuration 1,2 et 2% en mole d'unité du 1,3-butadiène sous la configuration 1,4, 11% en mole de myrcène sous la configuration 3,4 et 7% en mole de myrcène sous la configuration 1,4 et 0.84% de vinylpyridine.

La Tg du terpolymère d'éthylène, de 1,3-butadiène et de myrcène est à -54°C. Le terpolymère ne présente pas de cristallinité.

## Revendications

1. Procédé de synthèse d'un polymère à blocs comprenant un premier bloc d'un copolymère statistique comprenant des unités d'un 1,3-diène et plus de 50% en mole d'unités éthylène et un deuxième bloc d'un homopolymère de polyvinylpyridine, le pourcentage molaire étant exprimé par rapport au nombre total des unités de répétition constitutives du premier bloc, lequel procédé comprend la copolymérisation d'un mélange monomère contenant de l'éthylène et un 1,3-diène en présence d'un système catalytique, suivie de l'homopolymérisation d'une vinylpyridine,

   le système catalytique étant à base au moins d'un métallocène de formule (I) et d'un organomagnésien

   $$P(Cp^1Cp^2)Nd(BH_4)_{(1+y)}Li_y(THF)_x \qquad (I)$$

   $Cp^1$ et $Cp^2$ étant choisis dans le groupe constitué par le groupe fluorényle et les groupes fluorényles substitués,
   P étant un groupe pontant les deux groupes $Cp^1$ et $Cp^2$ et représentant un groupe $ZR^1R^2$,
   Z représentant un atome de silicium ou de carbone, $R^1$ et $R^2$, identiques ou différents, représentant chacun un groupe alkyle comprenant de 1 à 20 atomes de carbone, de préférence un méthyle,
   y, nombre entier, étant égal ou supérieur à 0,
   x, nombre entier ou non, étant égal ou supérieur à 0.

2. Procédé selon la revendication 1 dans lequel le 1,3-diène est le 1,3-butadiène, l'isoprène, le myrcène, le β-farnésène, leurs mélanges ou un mélange de 1,3-diènes dont un est le 1,3-butadiène.

3. Procédé selon la revendication 1 ou 2 dans lequel le 1,3-diène est le 1,3-butadiène, un mélange de 1,3-butadiène et de myrcène ou un mélange de 1,3-butadiène et de β-farnésène.

4. Procédé selon l'une quelconque des revendications 1 à 3 dans lequel le mélange monomère contenant de l'éthylène et un 1,3-diène est un mélange d'éthylène et d'un 1-3-diène.

5. Procédé selon l'une quelconque des revendications 1 à 4 dans lequel $Cp^1$ et $Cp^2$ sont identiques et représentent chacun un groupe fluorényle.

6. Procédé selon l'une quelconque des revendications 1 à 5 dans lequel P répond à la formule $SiMe_2$.

7. Procédé selon l'une quelconque des revendications 1 à 6 dans lequel l'organomagnésien est un diorganomagnésien ou un halogénure d'organomagnésien.

8. Procédé selon l'une quelconque des revendications 1 à 7 dans lequel l'organomagnésien est un dialkylmagnésien, de préférence le butyléthylmagnésium ou le butyloctylmagnésium.

9. Procédé selon l'une quelconque des revendications 1 à 8 dans lequel la vinylpyridine est est la 4-vinylpyridine, la 2-vinylpyridine ou leur mélange.

10. Polymère à blocs contenant un premier bloc et un deuxième bloc, le premier bloc étant un copolymère statistique comprenant des unités d'un 1,3-diène et plus de 50% en mole d'unités éthylène, le pourcentage molaire étant exprimé par rapport au nombre total d'unités de répétition constitutives du premier bloc, le deuxième bloc étant un homopolymère d'une vinylpyridine.

11. Polymère à blocs selon la revendication 10 dans lequel les unités éthylène présentes dans le premier bloc représentent au moins 65% en mole des unités de répétition constitutives du premier bloc, préférentiellement au moins 80% en mole des unités de répétition constitutives du premier bloc.

12. Polymère à blocs selon l'une quelconque des revendications 10 à 11 dans lequel le premier bloc est un copolymère statistique d'éthylène et d'un 1,3-diène, préférentiellement un copolymère statistique d'éthylène et du 1,3-butadiène.

13. Polymère à blocs selon l'une quelconque des revendications 10 à 12, dans lequel le premier bloc contient des motifs 1,2-cyclohexanediyle, le taux molaire de motif 1,2-cyclohexanediyle dans le premier bloc variant préférentiellement de 1 à 15% du nombre total des unités de répétition constitutives du premier bloc.

14. Polymère à blocs selon l'une quelconque des revendications 10 à 13 dans lequel la vinylpyridine est la 4-vinylpyridine, la 2-vinylpyridine ou leur mélange.

15. Polymère à blocs selon l'une quelconque des revendications 10 à 14 lequel polymère est un dibloc.

**Patentansprüche**

1. Verfahren zur Synthese eines Blockpolymers, das einen ersten Block aus einem statistischen Copolymer, das Einheiten eines 1,3-Diens und mehr als 50 Mol-% Ethyleneinheiten umfasst, und einen zweiten Block aus einem Polyvinylpyridin-Homopolymer umfasst, wobei der Molprozentanteil im Verhältnis zur Gesamtzahl der Wiederholungseinheiten des ersten Blocks ausgedrückt ist, wobei das Verfahren die Copolymerisation einer Monomerenmischung, die Ethylen und 1,3-Dien enthält, in Gegenwart eines katalytischen Systems und die nachfolgende Homopolymerisation eines Vinylpyridins umfasst,

    wobei das katalytische System mindestens auf einem Metallocen der Formel (I) und einer Organomagnesiumverbindung basiert,

    $$P(Cp^1Cp^2)Nd(BH_4)_{(1+y)}Li_y(THF)_x \qquad (I)$$

    wobei $Cp^1$ und $Cp^2$ aus der Gruppe bestehend aus der Fluorenylgruppe und substituierten Fluorenylgruppen ausgewählt sind,
    wobei P eine die beiden Gruppen $Cp^1$ und $Cp^2$ verbrückende Gruppe ist und für eine Gruppe $ZR^1R^2$ steht, wobei Z für ein Silicium- oder Kohlenstoffatom steht und $R^1$ und $R^2$ gleich oder verschieden sind und jeweils für eine Alkylgruppe mit 1 bis 20 Kohlenstoffatomen, vorzugsweise ein Methyl, stehen,
    wobei y ganzzahlig ist und gleich oder größer als 0 ist, wobei x ganzzahlig oder nicht ganzzahlig ist und gleich oder größer als 0 ist.

2. Verfahren nach Anspruch 1, wobei es sich bei dem 1,3-Dien um 1,3-Butadien, Isopren, Myrcen, β-Farnesen, Mischungen davon oder eine Mischung von 1,3-Dienen, von denen eines 1,3-Butadien ist, handelt.

3. Verfahren nach Anspruch 1 oder 2, wobei es sich bei dem 1,3-Dien um 1,3-Butadien, eine Mischung von 1,3-Butadien und Myrcen oder eine Mischung von 1,3-Butadien und β-Farnesen handelt.

4. Verfahren nach einem der Ansprüche 1 bis 3, wobei es sich bei der Monomerenmischung, die Ethylen und ein 1,3-Dien enthält, um eine Mischung von Ethylen und einem 1,3-Dien handelt.

5. Verfahren nach einem der Ansprüche 1 bis 4, wobei $Cp^1$ und $Cp^2$ gleich sind und jeweils für eine Fluorenylgruppe stehen.

6. Verfahren nach einem der Ansprüche 1 bis 5, wobei P der Formel $SiMe_2$ entspricht.

7. Verfahren nach einem der Ansprüche 1 bis 6, wobei es sich bei der Organomagnesiumverbindung um eine Diorganomagnesiumverbindung oder ein Organomagnesiumhalogenid handelt.

8. Verfahren nach einem der Ansprüche 1 bis 7, wobei es sich bei der Organomagnesiumverbindung um eine Dialkylmagnesiumverbindung, vorzugsweise Butylethylmagnesium oder Butyloctylmagnesium, handelt.

9. Verfahren nach einem der Ansprüche 1 bis 8, wobei es sich bei dem Vinylpyridin um 4-Vinylpyridin, 2-Vinylpyridin oder eine Mischung davon handelt.

10. Blockpolymer, das einen ersten Block und einen zweiten Block enthält, wobei es sich bei dem ersten Block um ein statistisches Copolymer handelt, das Einheiten eines 1,3-Diens und mehr als 50 Mol-% Ethyleneinheiten umfasst, wobei der Molprozentanteil im Verhältnis zur Gesamtzahl der Wiederholungseinheiten des ersten Blocks ausgedrückt ist, wobei es sich bei dem zweiten Block um ein Homopolymer eines Vinylpyridins handelt.

11. Blockpolymer nach Anspruch 10, wobei die im ersten Block vorliegenden Ethyleneinheiten mindestens 65 Mol-% der Wiederholungseinheiten, aus denen der erste Block aufgebaut ist, vorzugsweise mindestens 80 Mol-% der Wiederholungseinheiten, aus denen der erste Block aufgebaut ist, ausmachen.

12. Blockpolymer nach einem der Ansprüche 10 bis 11, wobei es sich bei dem ersten Block um ein statistisches Copolymer von Ethylen und einem 1,3-Dien, vorzugsweise ein statistisches Copolymer von Ethylen und 1,3-Butadien, handelt.

13. Blockpolymer nach einem der Ansprüche 10 bis 12, wobei der erste Block 1,2-Cyclohexandiyleinheiten enthält, wobei der molare Gehalt an 1,2-Cyclohexandiyleinheiten im ersten Block vorzugsweise zwischen 1 und 15 % der Gesamtzahl der Wiederholungseinheiten, aus denen der erste Block aufgebaut ist, variiert.

14. Blockpolymer nach einem der Ansprüche 10 bis 13, wobei es sich bei dem Vinylpyridin um 4-Vinylpyridin, 2-Vinylpyridin oder eine Mischung davon handelt.

15. Blockpolymer nach einem der Ansprüche 10 bis 14, wobei es sich bei dem Polymer um einen Diblock handelt.

## Claims

1. Process for the synthesis of a block polymer comprising a first block of a statistical copolymer comprising units of a 1,3-diene and more than 50 mol% of ethylene units, and a second block of a polyvinylpyridine homopolymer, the molar percentage being expressed relative to the total number of constituent repeat units of the first block, which process comprises the copolymerization of a monomer mixture containing ethylene and a 1,3-diene in the presence of a catalytic system, followed by the homopolymerization of a vinylpyridine,

   the catalytic system being based on at least one metallocene of formula (I) and an organomagnesium compound

$$P(Cp^1Cp^2)Nd(BH_4)_{(1+y)}Li_y(THF)_x \qquad (I)$$

   $Cp^1$ and $Cp^2$ being selected from the group consisting of the fluorenyl group and substituted fluorenyl groups, P being a group bridging the two groups $Cp^1$ and $Cp^2$ and representing a group $ZR^1R^2$, Z representing a silicon or carbon atom, $R^1$ and $R^2$, which are identical or different, each representing an alkyl group comprising from 1 to 20 carbon atoms, preferably a methyl, y is an integer equal to or greater than 0,
   x is an integer or non-integer equal to or greater than 0.

2. Process according to Claim 1, wherein the 1,3-diene is 1,3-butadiene, isoprene, myrcene, β-farnesene or mixtures thereof, or a mixture of 1,3-dienes, one of which is 1,3-butadiene.

3. Process according to Claim 1 or 2, wherein the 1,3-diene is 1,3-butadiene, a mixture of 1,3-butadiene and myrcene, or a mixture of 1,3-butadiene and β-farnesene.

4. Process according to any one of Claims 1 to 3, wherein the monomer mixture containing ethylene and a 1,3-diene is a mixture of ethylene and a 1,3-diene.

5. Process according to any one of Claims 1 to 4, wherein $Cp^1$ and $Cp^2$ are identical and each represent a fluorenyl group.

6. Process according to any one of Claims 1 to 5, wherein P corresponds to the formula $SiMe_2$.

7. Process according to any one of Claims 1 to 6, wherein the organomagnesium compound is a diorganomagnesium compound or an organomagnesium halide.

8. Process according to any one of Claims 1 to 7, wherein the organomagnesium compound is a dialkylmagnesium

compound, preferably butylethylmagnesium or butyloctylmagnesium.

**9.** Process according to any one of Claims 1 to 8, wherein the vinylpyridine is 4-vinylpyridine, 2-vinylpyridine or the mixture thereof.

**10.** Block polymer containing a first block and a second block, the first block being a statistical copolymer comprising units of a 1,3-diene and more than 50 mol% of ethylene units, the molar percentage being expressed relative to the total number of constituent repeat units of the first block, the second block being a homopolymer of a vinylpyridine.

**11.** Block polymer according to Claim 10, wherein the ethylene units present in the first block represent at least 65 mol% of the constituent repeat units of the first block, preferentially at least 80 mol% of the constituent repeat units of the first block.

**12.** Block polymer according to either one of Claims 10 and 11, wherein the first block is a statistical copolymer of ethylene and a 1,3-diene, preferentially a statistical copolymer of ethylene and 1,3-butadiene.

**13.** Block polymer according to any one of Claims 10 to 12, wherein the first block contains 1,2-cyclohexanediyl subunits, the molar content of 1,2-cyclohexanediyl subunits in the first block preferentially ranging from 1 to 15% of the total number of constituent repeat units of the first block.

**14.** Block polymer according to any one of Claims 10 to 13, wherein the vinylpyridine is 4-vinylpyridine, 2-vinylpyridine or the mixture thereof.

**15.** Block polymer according to any one of Claims 10 to 14, which polymer is a diblock.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014114607 A1
- WO 2021053051 A
- WO 2021053296 A
- WO 2007054224 A2
- WO 2007054223 A2
- WO 2017093654 A1
- WO 2018020122 A1
- WO 2021023924 A
- WO 2017103543 A
- WO 2018104669 A
- WO 2007054224 A


### Littérature non-brevet citée dans la description


- *Macromolecules*, 2009, vol. 42, 3774-3779
- **LLAURO et al.** *Macromolecules*, 2001, vol. 34, 6304-6311
- **B. WUNDERLICH**. Thermal analysis. Academic Press, 1990, 281